# EUROPÄISCHE PATENTSCHRIFT

(11) **EP 3 576 538 B1**
(45) Veröffentlichungstag und Bekanntmachung des Hinweises auf die Patenterteilung: **27.05.2020**
(21) Anmeldenummer: 17705809.6
(22) Anmeldetag: 02.02.2017
(51) Int. Cl.: A21B 5/03, A21B 7/00

(54) **BACKVORRICHTUNG MIT WEICHENMECHANISMUS**
BAKING APPARATUS WITH DIVERTER MECHANISM
DISPOSITIF DE CUISSON AVEC UN MÉCANISME D'AIGUILLAGE

(43) Veröffentlichungstag der Anmeldung: 11.12.2019
(73) Patentinhaber: Eugster/Frismag AG, 8580 Amriswil (CH)
(72) Erfinder: RIESSBECK, Wolfgang, 8597 Landschlacht (CH); WÄGER, Simon, 8530 Amriswil (CH); IRMSCHER, Dirk, 8580 Amriswil (CH)
(74) Vertreter: Patentanwälte Behrmann Wagner PartG mbB
(86) Internationale Anmeldenummer: PCT/EP2017/052217
(87) Internationale Veröffentlichungsnummer: WO 2018/141387

(56) Entgegenhaltungen:
- WO-A2-2013/124809

## Beschreibung

Die Erfindung betrifft eine Backvorrichtung, bevorzugt eine HaushaltsBackvorrichtung, gemäß dem Oberbegriff des Anspruchs 1 zum Formen und Backen eines Lebensmittels, bevorzugt eines Flachbrotes, aus einer in einer Kapsel aufgenommenen Teigportion, mit einem Gehäuse, mit einer Kapselhandhabungseinrichtung zum Öffnen und/oder Entleeren der Kapsel und einer in dem Gehäuse angeordneten oberen Platte, insbesondere einer Back- und/oder Formplatte, und einer unteren Platte, insbesondere einer Back- und/oder Formplatte, die in einer Führungseinrichtung der Backvorrichtung entlang eines Verstellweges zwischen einer Aufnahmeposition zur Aufnahme der Teigportion aus der Kapsel, einer Wechselwirkungsposition zum Zusammenwirken mit der oberen Platte zum Backen und/oder Formen, insbesondere Pressen, der Teigportion, bevorzugt zur Herstellung eines Flachbrotes wie einer Tortilla oder zur Zubereitung eines Pizzabrotes, und einer Entleerungsposition, in der die untere Platte relativ zu einer Grundfläche der Backvorrichtung geneigt ist, verstellbar ist, wobei die Führungseinrichtung eine Weiche mit einem zwischen mindestens zwei Schaltpositionen schaltbaren Weichenelement zur Vorgabe des Verstellweges der unteren Platte in der Führungseinrichtung aufweist. Darüber hinaus betrifft die Erfindung ein Verfahren zum Betreiben einer erfindungsgemäßen Backvorrichtung gemäß Anspruch 13.

Aus der WO 2013/124809 A2 ist eine Haushalts-Flachbrotbackvorrichtung bekannt. Diese umfasst einen Öffnungsmechanismus für Teigportionskapseln, welcher ein teilkreissegmentförmiges Ringmesser umfasst, relativ zu dem eine zu öffnende Kapsel mittels eines Stempels verstellbar ist, um eine Deckelfolie der Kapsel mittels des Messers zu durchstoßen und somit die Kapsel zu öffnen und die Teigportion in die Vorrichtung zu entleeren. Gemäß einem in der Druckschrift beschriebenen Ausführungsbeispiel ist vorgesehen, dass die Teigportion zwischen einer unteren und einer oberen Back- und Formplatte gepresst (verflacht) und gebacken wird. Dabei kann die untere Platte in einer Führungseinrichtung zwischen einer Aufnahmeposition, in der sie die Teigportionen aus der Kapsel aufnehmen kann, einer Wechselwirkungsposition, in der die untere Platte mit der oberen Platte zum Formen und Backen der Teigportion zusammenwirkt und einer abgeschrägten Entleerungsposition verstellt werden, wobei die untere Platte in der Entleerungsposition so angeordnet ist, dass das fertige Fladenbrot in Richtung einer Gehäuserückseite ausgegeben wird. Die Führungseinrichtung umfasst zwei über einen Federmechanismus durch Verstellen der unteren Platte schaltende Weichenelemente, die den Verstellweg der unteren Platte in der Führungseinrichtung vorgeben, wobei die Führungseinrichtung hierzu einen umfangsgeschlossenen Führungsabschnitt aufweist, welcher ausschließlich in einer Richtung von der unteren Backplatte durchfahrbar ist. Verbesserungswürdig bei der bekannten Lebensmittelzubereitungsvorrichtung ist die Zuverlässigkeit des Schaltvorgangs. Darüber hinaus wird als nachteilig empfunden, dass das Flachbrot rückwärtig ausgeworfen wird.

Ausgehend von dem vorgenannten Stand der Technik liegt der Erfindung die Aufgabe zugrunde, eine hinsichtlich der Zuverlässigkeit des Schaltverhaltens des Weichenelementes verbesserte Backvorrichtung anzugeben. Bevorzugt soll die Backvorrichtung dabei derart ausgebildet sein, dass das Flachbrot in Richtung einer Bedien- bzw. Gehäusevorderseite ausgebbar ist.

Ferner besteht die Aufgabe darin, ein entsprechend verbessertes Bedienverfahren für eine erfindungsgemäße Backvorrichtung anzugeben. Diese Aufgabe wird hinsichtlich der Backvorrichtung mit den Merkmalen des Anspruchs 1 gelöst, d.h. bei einer gattungsgemäßen Backvorrichtung dadurch, dass sie einen dem Weichenelement zugeordneten elektromotorischer Antrieb zum automatischen Schalten des Weichenelementes (zwischen seinen Schaltpositionen) umfasst.

Hinsichtlich des Verfahrens wird die Aufgabe mit den Merkmalen des Anspruchs 13 gelöst, d.h. bei einem gattungsgemäßen Verfahren dadurch, dass das Weichenelement, mittels eines elektromotorischen Antriebs zwischen seinen Schaltpositionen verstellt wird, wobei bevorzugt ein Verstellen des Weichenelementes mittels des elektromotorischen Antriebs aus einer ersten Schaltposition in eine zweite Schaltposition erfolgt, nachdem die untere Platte aus der Aufnahmeposition in Richtung der Wechselwirkungsposition verstellt wurde (und bevorzugt, bevor die untere Platte das Weichenelement auf ihrem Verstellweg in Richtung Entleerungsposition berührt), um einen Verstellweg in Richtung der Entleerungsposition freizugeben und/oder dass das Weichenelement von der zweiten Schaltposition, insbesondere zurück, in die erste Schaltposition verstellt wird, nachdem die untere Platte aus der Entleerungsposition, insbesondere zurück, in Richtung der Wechselwirkungsposition verstellt wurde, um den Verstellweg, insbesondere zurück, in die Aufnahmeposition freizugeben (bevorzugt ebenfalls bevor die untere Platte das Weichenelement auf ihrem Weg zurück in die Aufnahmeposition berührt).

Vorteilhafte Weiterbildungen der Erfindung sind in den Unteransprüchen angegeben, in den Rahmen der Erfindung fallen sämtliche Kombinationen aus zumindest zwei von in der Beschreibung, den Ansprüchen und/oder den Figuren offenbarten Merkmalen.

Zur Vermeidungen von Wiederholungen sollen vorrichtungsgemäß offenbarte Merkmale als erfahrensgemäß offenbart gelten und beanspruchbar sein. Ebenso sollen verfahrensgemäß offenbarte Merkmale auch als vorrichtungsgemäß gelten und beanspruchbar sein.

Der Erfindung liegt der Gedanke zugrunde, zum Schalten des mindestens einen, bevorzugt einzigen, Weichenelementes einen elektromotorischen Antrieb vorzusehen, um somit den Schaltprozess und -zeitpunkt präzise steuern zu können. Darüber hinaus ermöglicht die Zuordnung eines elektromotorischen Antriebs zum Weichenelement den Aufbau einer einfacheren Führungseinrichtung, bevorzugt ohne umfangsgeschlossenen, ausschließlich in einer einzigen Richtung durch fahrbaren Führungsabschnitt und/oder den Verzicht auf mehrere Weichenelemente mit unterschiedlicher Funktion. Auf ein Schalten des Weichenelementes durch Kraftbeaufschlagung desselben Mittels der unteren Platte kann zudem verzichtet werden, wodurch ein Verkanten oder sonstige Führungsstörungen sicher vermieden werden.

Bevorzugt ist die erste und/oder zweite Schaltposition, ganz besonders bevorzugt die erste Schaltposition des Weichenelementes definiert durch einen, bevorzugt ortsfesten Anschlag innerhalb des Gehäuses, der insoweit also die Verstellbewegung, insbesondere Schwenk- bzw. Rotationsbewegung des Weichenelementes, die aktuiert wird über den elektromotorischen Antrieb, begrenzt.

In der vorliegenden Offenbarung beziehen sich die Begrifflichkeiten bzw. Ortsangaben "unten" bzw. "untere" und "oben" bzw. "obere" auf eine entsprechende Relativposition entlang einer Vertikalen bei bestimmungsgemäßer Aufstellung der Backvorrichtung über entsprechende, vorzugsweise von Standfüßen gebildeten Abstützflächen auf einer horizontalen Unterlage bzw. Aufstellfläche, die dann parallel ausgebildet ist, zu einer Grundfläche der Backvorrichtung. Anders ausgedrückt beziehen sich diese Begrifflichkeiten auf eine Position entlang einer senkrecht zur Flächenerstreckung der Abstützflächen oder einen von dieser aufgespannten Grundfläche erstreckende Gehäusehochachse. In diesem Zusammenhang bedeutet dann auch eine schräge bzw. geneigte Anordnung eine solche, bei der die untere Platte mit der senkrecht zur Vertikalen verlaufenden Horizontale bzw. der Aufstellebene einen Winkel einschließt, sodass die untere Platte geneigt ist, insbesondere derart, dass das fertige Lebensmittelprodukt in der Entleerungsposition, insbesondere selbsttätig, sprich schwerkraftbedingt einen entsprechenden Reibwiederstand überwindet und entlang der unteren Platte nach unten, insbesondere in einem, bevorzugt von einer Schublade gebildeten Behälter oder Aufnahmeraum rutscht und von dort, insbesondere manuell, entnommen werden kann.

Im Hinblick auf die konkrete Ausgestaltung der Führungseinrichtung gibt es unterschiedliche Möglichkeiten. Wesentlich ist, dass die untere Führungsplatte, bevorzugt angetrieben durch einen elektromotorischen Antrieb in führender Wechselwirkung mit einem Führungssystem, insbesondere einer Führungsschiene bzw. Kulisse steht. Dabei ist es beispielsweise möglich, wenn die untere Platte über einen seitlichen Fortsatz in eine Führungsschiene- bzw. Kulisse eingreift und in dieser und/oder an dieser bei ihrer Verstellbewegung geführt wird.

Grundsätzlich ist es möglich, dass die Führungseinrichtung auf zwei einander gegenüberliegenden Seiten der unteren Platte jeweils ein mittels des elektromotorischen Antriebs angeordnetes Weichenelement aufweist, wobei die Weichenelemente, bevorzugt zeitgleich mit dem elektromotorischen Antrieb verstellbar sind. Bevorzugt ist es zur Vereinfachung der Konstruktion, wenn ein Weichenelement, insbesondere ein einziges Weichenelement, nur auf einer einzigen Seite der unteren Platte vorgesehen ist. Für den Fall des Vorsehens von zwei Weichenelementen ist es bevorzugt, wenn diese die gleiche Funktion aufweisen und entsprechend symmetrisch angeordnet sind.

Wie erwähnt ist die untere Backplatte bevorzugt mittels eines elektromotorischen Antriebs, geführt in der Führungseinrichtung zwischen den zuvor erläuterten drei unterschiedlichen Positionen verstellbar - alternativ ist auch eine manuelle Verstellbarkeit realisierbar, wobei dann der unteren Backplatte, bevorzugt entsprechender Griff bzw. manuelle Verstellmittel zugeordnet sind.

In der Wechselwirkungsposition befindet sich die untere Platte bevorzugt in einer Backkammer innerhalb des Gehäuses, die ganz besonders bevorzugt ein eigenes, bevorzugt zumindest größtenteils metallisches Backkammergehäuse innerhalb des Vorrichtungsgehäuses aufweist. In der Aufnahmeposition und/oder der Entleerungsposition befindet sich die untere Backplatte, bevorzugt zumindest größtenteils außerhalb der Backkammer.

Grundsätzlich ist es möglich, dass von der oberen und/oder unteren Platte separate Heizmittel zum Backen der Teigportion vorgesehen sind, ganz besonders bevorzugt ist es, wenn die untere und/oder obere Platte als Heizplatte/n ausgebildet sind, also zusammen mit der jeweiligen Platte verstellbare Heizmittel aufweisend. Zusätzlich oder alternativ dienen die untere und/oder obere Platte bevorzugt zur unmittelbaren Kraftbeaufschlagung der Teigportion während des Formprozesses, insbesondere Pressprozesses zum Verflachen der Teigportion zu dem Lebensmittel (Lebensmittelprodukt).

Grundsätzlich ist es möglich, dem Weichenelement für den Schaltvorgang einen eigenen bzw. separaten elektromotorischen Antrieb zuzuordnen. Bevorzugt ist jedoch eine Ausführungsform, bei der es sich bei dem elektromotorischen Antrieb zum Schalten des Weichenelementes um einen, mindestens eine weitere Funktion der Backvorrichtung übernehmenden, elektromotorischen Antrieb handelt, ganz besonders bevorzugt um einen elektromotorischen Antrieb der Kapselhandhabungseinrichtung zum Betätigen eines Kapselöffnungs- und/oder Entleerungsmechanismus zum Öffnen und/oder Entleeren, insbesondere Leerdrücken, der Kapsel, bevorzugt unter Deformation derselben. Ganz besonders zweckmäßig ist es, wenn es sich bei dem elektromotorischen Antrieb um einen einem Stößel der Kapselhandhabungsvorrichtung zugeordneten, diesen betätigenden Antrieb handelt, mit dem die Kapsel zum Entleeren der Teigportion aus der Kapsel druckbeaufschlagbar ist und/oder um einen Antrieb eines bevorzugt relativ zu dem Stößel, verstellbaren, Niederhaltestempels zum Verstellen der Kapsel gegen ein Öffnungselement, insbesondere ein Messer, ganz besonders bevorzugt ein Ringmesser, zum Durchstoßen eines Kapseldeckels, insbesondere einer Deckelfolie. Besonders bevorzugt ist dabei eine bereits angedeutete Ausführungsform, bei der die Kapselhandhabungsmittel sowohl einen Stößel als auch einen Niederhaltestempel umfassen, wobei der Niederhaltestempel bevorzugt relativ zu dem Stößel und dem Öffnungselement, insbesondere dem Messer, bevorzugt mittels des elektromotorischen Antriebs zum Verstellen des Weichenelementes verstellbar ist, wobei der Niederhaltestempel bevorzugt derart ausgebildet und angeordnet ist, dass mit diesem die Kapsel, insbesondere im Bereich eines radial vorstehenden Kapsel-Umfangsrandes, zum Verstellen der Kapsel gegen das Öffnungselement und dadurch Durchstoßen der Kapsel mittels des Öffnungselements, kraftbeaufschlagbar ist. Bevorzugt wird die Kapsel zudem mittels des Niederhaltestempels nach dem Öffnen innerhalb des Gehäuses der Vorrichtung relativ zu dem Messer fixiert und positioniert, insbesondere durch Klemmen des vorerwähnten radial überstehenden Umfangsrandes der Kapsel zwischen dem Niederhaltestempel und einem Anschlag. Der Anschlag kann dabei von einem Auflageabschnitt für die Kapsel gebildet sein, der bevorzugt entgegen der Federkraft mindestens einer Rückstellfeder zusammen mit der Kapsel durch Kraftbeaufschlagung der Kapsel mittels des Niederhaltestempels relativ zu dem Messer gegen einen fest zu dem Messer positionierten (Fest-)Anschlag verstellbar ist. Alternativ kann bei Verzicht auf einen derartigen, bevorzugt vorgesehenen Anschlagabschnitt die Kapsel mittels des Niederhaltestempels direkt gegen einen fest relativ zum Messer positionierten Anschlag verstellt werden.

Bevorzugt umfasst die Kapselhandhabungseinrichtung eine Kapselschublade, die aus dem Gehäuse, insbesondere einer Frontseite, heraus verstellbar ist, um in dieser herausgezogenen Position eine (neue) Kapsel auf die Kapselschublade auflegen und diese mit der Kapsel in das Gehäuse verstellen zu können, insbesondere in einen Bereich oberhalb der Aufnahmeposition der unteren Platte, sodass die Teigportion, insbesondere beim Entleerungsvorgang der Kapsel mittels des Stößels, nach unten auf die untere Platte fallen oder rutschen kann. Unabhängig von dem Vorsehen einer vorerwähnten Kapselschublade, die bevorzugt den vorerwähnten Auflageabschnitt bzw. -anschlag für die Kapsel enthält, ist es bevorzugt, wenn die untere Platte sich in ihrer Aufnahmeposition in einem Bereich unterhalb der Kapselhandhabungseinrichtung, insbesondere in einer Draufsicht entlang der Vertikalen von oben nach unten innerhalb einer Projektionsfläche der Kapselhandhabungseinrichtung befindet, sodass ein Herunterfallen und/oder Gleiten der Teigportion aus der Kapsel auf die untere Platte in deren Aufnahmeposition gewährleistet werden kann.

Durch die Doppel- bzw. Mehrfachnutzung des elektromotorischen Antriebs für den Kapselöffnungs- und/oder Entleerungsmechanismus können Kosten für einen separaten Antrieb eingespart werden, ohne die Funktionalität des Schaltungsmechanismus für das Weichenelement negativ zu beeinflussen.

Ganz besonders bevorzugt ist das Weichenelement derart mit dem elektromotorischen Antrieb gekoppelt, dass das Weichenelement durch Rotieren des elektromotorischen Antriebs betätigbar ist, wobei elektromotorischer Antrieb und Weichenelement über Kraftübertragungsmittel mechanisch gekoppelt sind. Ganz besonders bevorzugt ist es, wenn mittels des elektromotorischen Antriebs eine Exzenterwelle rotierbar ist und das Weichenelement über die Kraftübertragungsmittel mit der Exzenterwelle, insbesondere mit Radialabstand zu deren Rotationsachse wirkverbunden ist. Für den bevorzugten Fall, dass es sich bei dem elektromotorischen Antrieb für das Weichenelement gleichzeitig um einen elektromotorischen Antrieb zum Verstellen eines Stößels und/oder eines Niederhaltestempels handelt, ist es bevorzugt, wenn Stößel und/oder Niederhaltestempel, insbesondere an unterschiedlichen Umfangspositionen um die Rotationsachse ebenso wie die vorerwähnten Kraftübertragungsmittel gelenkig mit der Exzenterwelle verbunden sind, insbesondere derart, dass eine Zwangskopplung von Weichenelement und Stößel und/oder Niederhaltestempel resultiert derart, dass bei einem Verstellen des Weichenelementes automatisch auch der Stößel und/oder das Niederhalteelement bewegt werden.

Insbesondere, jedoch ausdrücklich nicht ausschließlich für den Fall, dass es sich bei dem elektromotorischen Antrieb für das Weichenelement um einen elektromotorischen Antrieb der Kapselhandhabungseinrichtung handelt, ist es bevorzugt, wenn die Kraftübertragungsmittel, mit welchem eine Rotationsbewegung des elektromotorischen Antriebs in eine Verstellbewegung, insbesondere Verschwenkbewegung des Weichenelementes umwandelbar ist, eine Toleranzausgleichseinrichtung (Toleranzausgleichmittel) umfassen, die zwei durch Rotieren des elektromotorischen Antriebs relativ zueinander entgegen einer Federkraft mindestens einer Toleranzausgleichsfeder, bevorzugt translatorisch, zueinander verstellbare Kraftübertragungselemente, insbesondere relativ zueinander translatorisch verstellbar geführte Stabelemente umfasst. Besonders zweckmäßig ist es dabei, wenn eines der Kraftübertragungselemente translatorisch verstellbar abschnittsweise in dem anderen der Kraftübertragungselemente geführt ist. Durch das Vorsehen der Toleranzausgleichsfedermittel kann eine präzise Einhaltung der Schaltpositionen des Weichenelementes trotz diverser sich addierender Bauteiltoleranzen sichergestellt werden. Bevorzugt ist die Toleranzausgleichsfeder in einem Bereich zwischen den Kraftübertragungselementen angeordnet und stützt sich kraftübertragend an beiden Kraftübertragungselementen ab. Ganz besonders bevorzugt ist die mindestens eine, bevorzugt ausschließlich eine, Toleranzausgleichsfeder, insbesondere eine Spiralfeder, noch weiter bevorzugt eine Druckfeder, derart angeordnet, dass diese bei Zugkraftbeaufschlagung der Kraftübertragungselemente mittels des elektromotorischen Antriebs spannbar ist, insbesondere durch Zusammendrücken bzw. Komprimieren der Toleranzausgleichsfeder. Dabei ist es ganz besonders bevorzugt, wenn die Toleranzausgleichsfeder in einer Schaltposition des Weichenelementes, insbesondere der zweiten Schaltposition, die ein Verstellen der unteren Platte der Wechselwirkungsposition in die Entleerungsposition ermöglicht, gespannt, insbesondere komprimiert bzw. zusammengedrückt ist. Bevorzugt ist die Toleranzausgleichsfeder derart angeordnet, dass diese bestrebt ist, die Kraftübertragungselemente auseinander zu drücken bzw. die Gesamtlängenerstreckung der Kraftübertragungsmittel zu vergrößern.

Insbesondere ein zuvor erläutertes Antreiben des Weichenelementes über einen elektromotorischen Antrieb der Kapselhandhabungseinrichtung, insbesondere über die erwähnte Exzenterwelle, birgt grundsätzlich ein Risiko, dass systembedingte Toleranzen in Bezug auf den Drehwinkel des elektromotorischen Antriebs und/oder der Exzenterwelle die Funktion der Weiche beeinträchtigen. Insbesondere könnten die Toleranzen zu Fehlstellungen beim Schalten des Weichenelementes führen, was dazu führen könnte, dass die geschaltete Schaltposition bzw. FührungsRichtung bzw. der beabsichtigte Verstellweg für die untere Platte von dem Weichenelement selbst blockiert werden würde. Durch die Integration des vorerwähnten Toleranzausgleichs in dem Weichenelementantriebsstrang soll ein sicheres Schalten des Weichenelementes in die Schaltpositionen sicherstellen.

Ganz besonders bevorzugt umfasst die Toleranzausgleichseinrichtung einen Anschlag, der die Relativbewegung der Kraftübertragungselemente der Kraftübertragungsmittel begrenzt. Ganz besonders bevorzugt handelt es sich um einen justierbaren, sprich einstellbaren Anschlag, um diese maximale Relativbewegung der Kraftübertragungselemente, insbesondere aufeinander zu zu begrenzen. Im einfachsten Fall kann als Anschlag hierzu eine Schraube vorgesehen werden, wobei die Einschraubstrecke in ein zugehöriges Innengewinde die wirksame Länge des Anschlags bestimmt. Ganz besonders bevorzugt stützt sich an dem Anschlag mittelbar oder unmittelbar, bevorzugt auf einer von einer Anschlagfläche des Anschlags abgewandten Seite die Toleranzausgleichsfeder ab. Dabei ist es besonders bevorzugt, wenn durch Justieren, sprich Verstellen des Anschlags gleichzeitig eine Federvorspannung der mindestens einen Toleranzausgleichsfeder einstellbar ist.

Wie bereits erwähnt ist es bevorzugt, wenn das Weichenelement zwischen seinen Stellpositionen mittels des elektromotorischen Antriebs um eine Schwenkachse verschwenkbar ist, wobei eines der Kraftübertragungselemente mit Abstand zu der Schwenkachse mit dem Weichenelement gelenkig verbunden ist. Ganz besonders bevorzugt wird zumindest die, bevorzugt ausschließlich die erste Schaltposition, definiert von einem ortsfesten bzw. gehäusefesten Anschlag im Gehäuse, mit dem das Weichenelement in der ersten Schaltposition anschlagend zusammenwirkt, wodurch eine Weiterverstellbewegung des Weichenelementes trotz einer möglichen weiteren Rotation des Antriebsmotors begrenzt wird - diese mögliche Weiterbewegung bzw. weitere Rotationsbewegung des Antriebsmotors kann dann mittels der Toleranzausgleichseinrichtung aufgefangen bzw. kompensiert werden, insbesondere durch Spannen oder Entspannen der Toleranzausgleichsfeder.

Bevorzugt ist die Führungseinrichtung derart ausgebildet, dass die untere Platte in der Entleerungsposition hin zu einer, bevorzugt einer Kapselschubladeneinführöffnung und/oder mindestens ein Eingabeelement für Benutzereingaben und/oder mindestens ein Display aufweisenden Gehäusevorderseite geneigt ist, sodass das fertige Lebensmittelprodukt in Richtung Gehäusevorderseite, insbesondere in einen Behälter hinein rutschen kann. Ganz besonders bevorzugt ist es, wenn, zusätzlich oder alternativ zu vorstehenden Merkmalen die Führungseinrichtung zumindest abschnittsweise, bevorzugt über den größten Teil ihrer Längserstreckung in ihrer Aufnahmeposition unterhalb, insbesondere in einer vertikalen Projektionsfläche, eines bevorzugt vorgesehenen Stößels und/oder eines bevorzugt vorgesehenen Niederhaltestempels der Kapselhandhabungseinrichtung angeordnet ist und/oder unterhalb einer bevorzugt vorgesehenen Kapselschublade zum Zuführung einer neuen Kapsel in das Gehäuse.

Die erfindungsgemäße Zuordnung eines elektromotorischen Antriebs zu dem Weichenelement ermöglicht einen besonders einfachen Aufbau der Führungseinrichtung. Diese umfasst bevorzugt einen geradlinigen, insbesondere (bei bestimmungsgemäßer Aufstellung der Backvorrichtung auf einer horizontalen Aufstellfläche) horizontalen, ersten Führungsabschnitt zum Verstellen der unteren Platte zwischen der Aufnahmeposition und der Wechselwirkungsposition und einen winklig zu dem ersten Führungsabschnitt angeordneten, bevorzugt geradlinigen oder gekrümmten, zweiten, bevorzugt nach unten und in Richtung Gehäuseforderseite geneigten, Führungsabschnitt zum Verstellen der unteren Platte, insbesondere von der Wechselwirkungsposition, in die Entleerungsposition. Das Weichenelement befindet sich bevorzugt im Bereich eines Kreuzungs- bzw. Abzweigungspunktes zwischen dem ersten und dem zweiten Führungsabschnitt und gibt bevorzugt in der ersten Schaltstellung den geradlinigen Verstellweg zwischen der Aufnahmeposition und der Wechselwirkungsposition frei und in der zweiten Schaltposition den Verstellweg von der Wechselwirkungsposition in die Entleerungsposition, wobei es bevorzugt ist, wenn das Weichenelement in der zweiten Schaltposition den direkten Weg zurück von der Wechselwirkungsposition in die Aufnahmeposition blockiert und/oder das Weichenelement in der ersten Schaltposition den direkten Weg von der Wechselwirkungsposition zurück in die Aufnahmeposition blockiert.

Eine besonders bevorzugte, durch das Vorsehen des elektromotorischen Antriebs zum Verstellen des Weichenelementes realisierbare Ausführungsform sieht vor, dass der zweite Führungsabschnitt der Führungseinrichtung als Sackgassenabschnitt ausgebildet ist, also derart, dass die untere Platte nach Erreichen der endgültigen Entleerungsposition denselben Weg zurück entlang des zweiten Führungsabschnittes bewegt werden muss und diesen nicht in einer einzigen Richtung vollständig durchlaufen kann, wie dies im Stand der Technik realisiert ist.

Ganz besonders bevorzugt ist der Entleerungsposition der unteren Platte ein, bevorzugt ein von einer aus einer Gehäusefrontseite entnehmbaren Lebensmittelschublade, gebildeter Aufnahmeraum bzw. Behälter für ein fertig gebackenes Lebensmittel innerhalb des Gehäuses zugeordnet.

Die Erfindung führt auch auf ein Verfahren zum Betreiben einer erfindungsgemäßen Backvorrichtung. Erfindungsgemäß ist vorgesehen, dass das Weichenelement der Führungseinrichtung mittels eines elektromotorischen Antriebs, insbesondere eines Antriebs von Kapselhandhabungsmitteln zwischen seinen Schaltpositionen verstellbar ist, ganz besonders bevorzugt derart, dass nach Verstellen der unteren Platte aus der Aufnahmeposition in Richtung der Wechselwirkungsposition, insbesondere in die Wechselwirkungsposition das Weichenelement von einer ersten Schaltstellung in eine zweite Schaltstellung verstellt wird, um somit den Verstellweg in Richtung geneigter Entleerungsposition freizugeben und den Verstellweg direkt zurück in die Aufnahmeposition zu blockieren und/oder dass nach erfolgter Rückstellung der unteren Platte aus der Entleerungsposition in die bevorzugt horizontale Wechselwirkungsposition das Weichenelement von der zweiten in die erste Schaltstellung verstellt wird, um somit den Verstellweg in die Aufnahmeposition freizugeben und den Verstellweg in die Entleerungsposition zu blockieren.

Ganz besonders bevorzugt ist es, wenn die Kraftübertragungsmittel, wie erwähnt, über eine Exzenterwelle angetrieben sind. Dabei ist es weiter bevorzugt, wenn sich ein Anlenkpunkt der Kraftübertragungsmittel an die Exzenterwelle bei in der Aufnahmeposition befindlicher unterer Platte und gleichzeitig in der ersten Schaltstellung befindlichem Weichenelement rotiert wird, um die Rotationsachse der Exzenterwelle, nachdem die untere Platte in Richtung der Wechselwirkungsposition verstellt wurde, um somit das Weichenelement in die zweite Schaltposition zu verstellen. Bevorzugt wird dann, nachdem die untere Platte aus der Wechselwirkungsposition in die Entleerungsposition und wieder in Richtung zurück in die Wechselwirkungsposition verstellt wurde die Exzenterwelle nicht wieder zurückbewegt, sondern in der gleichen Rotationsrichtung weiterbewegt, um das Weichenelement zurück in die erste Schaltstellung zu bewegen. Bevorzugt wird dann nach Verstellen der unteren Platte in die Aufnahmeposition die Exzenterwelle in die entgegengesetzte Umfangsrichtung zurückrotiert und dabei die zweite Schaltstellung des Weichenelementes durchlaufen, welches dann wieder die erste Schaltstellung einnimmt. Eine solche Ausführungsform ist insbesondere dann bevorzugt, wenn der Antrieb gleichzeitig mit dem Weichenelement den vorerwähnten Stößel und/oder den vorerwähnten Niederhaltestempel bewegt.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: eine stark schematisierte Darstellung eines bevorzugten Ausführungsbeispiels einer nach dem Konzept der Erfindung ausgebildeten, hier als Haushaltsbackvorrichtung ausgebildeten Lebensmittelzubereitungsvorrichtung,
- Fig. 1a bis Fig. 5b: eine Führungseinrichtung mit Weiche der in Fig. 1 gezeigten Lebensmittelzubereitungsvorrichtung in unterschiedlichen Betriebs- bzw. Schaltzuständen,

- Fig. 6: eine schematische Darstellung einer möglichen, bevorzugten Realisierung eines Antriebsstrangs zum Antreiben des Weichenelementes der Führungseinrichtung mit einem gemeinsamen elektromotorischen Antrieb zum Antreiben eines Stößels und eines Niederhaltestempels einer Kapselhandhabungseinrichtung der Lebensmittelzubereitungsvorrichtung und zum gleichzeitigen Schalten bzw. Antreiben des Weichenelementes der Führungseinrichtung, und
- Fig. 7a und Fig. 7b: unterschiedliche Darstellungen der Kapselhandhabungseinrichtung gemäß Fig. 6.

In den Figuren sind gleiche Elemente und Elemente mit der gleichen Funktion und den gleichen Bezugszeichen gekennzeichnet.

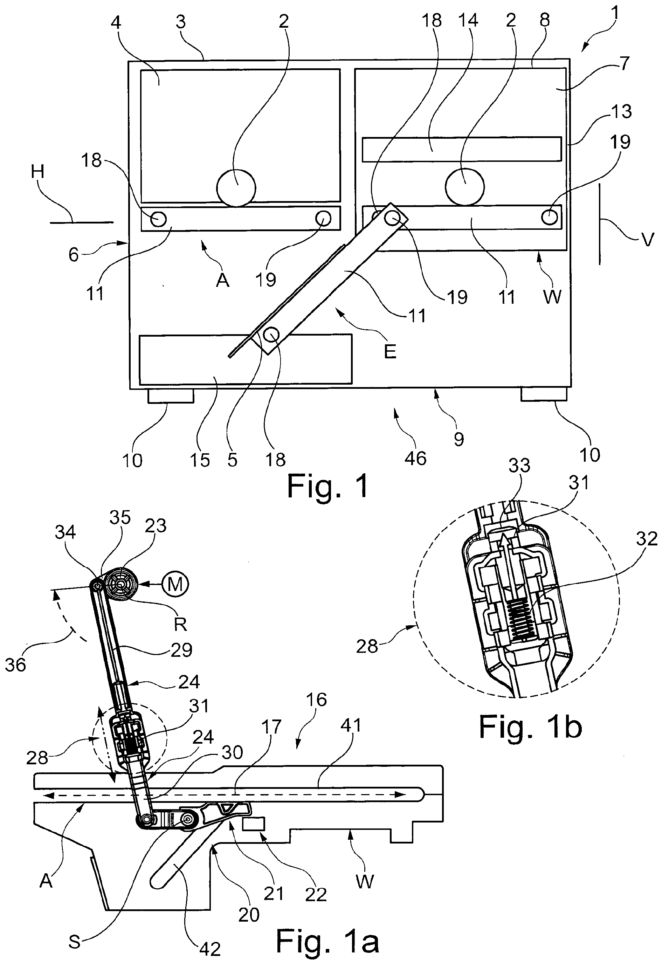

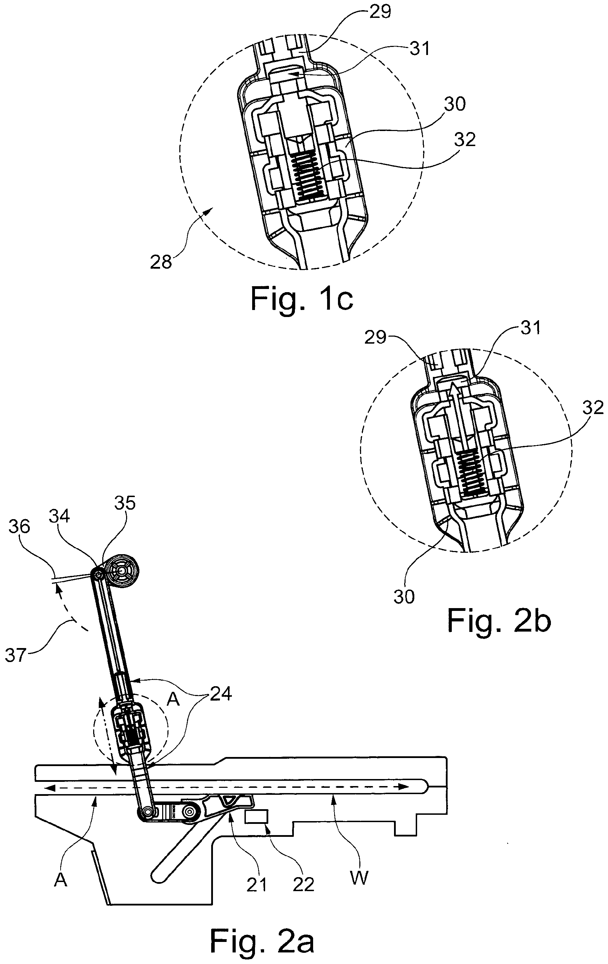

In Fig. 1 ist eine Lebensmittelzubereitungsvorrichtung 1 zum Backen und Formen einer zunächst noch in einer Kapsel, beispielsweise aus Kunststoff oder einer Leichtmetalllegierung aufgenommenen Teigportion 2 gezeigt. Die Teigportion 2 wird innerhalb eines Gehäuses 3 der Lebensmittelzubereitungsvorrichtung 1 mittels einer Kapselhandhabungseinrichtung 4 aus einer nicht gezeigten Kapsel, insbesondere einer Einwegkapsel entleert und dann, wie im Folgenden noch erläutert werden wird weiter verarbeitet, insbesondere durch Formen (Pressen) und Backen zu einem Lebensmittel 5 (Lebensmittelprodukt), vorliegend einem Flachbrot. Die Kapselhandhabungseinrichtung 4 ist derart ausgebildet, dass mit dieser einzelne (Portions-)Kapseln öffenbar und die Teigportion 2 aus der Kapsel entleerbar ist. Hierzu umfasst die Kapselhandhabungseinrichtung 4 bevorzugt, einen später noch zu erläuternden Stößel zum Druckbeaufschlagen, insbesondere Deformieren der Kapsel und/oder einen Niederhaltestempel zum Verstellen der Kapsel gegen ein Messer. Das Gehäuse 3 der Lebensmittelzubereitungsvorrichtung umfasst eine Gehäusefrontseite 6 mit nicht gezeigten Bedienelementen und/oder einem Display. Bevorzugt befindet sich in der Gehäusefronseite 6 eine Kapselschubladenöffnung zum Herausziehen und Hereinschieben einer bevorzugt vorgesehenen, fakultativen Kapselschublade. Ferner umfasst die Lebensmittelzubereitungsvorrichtung 1 innerhalb des Gehäuses 3 einen Backraum 7 mit einem Backraumgehäuse 8, vorliegend aus Metallblech zur Abschirmung der beim Backprozess auftretenden Temperaturen von zwischen etwa 170°C und 250°C. Die Lebensmittelzubereitungsvorrichtung 1 bzw. deren Gehäuse umfasst zudem eine Bodenseite 9, die bei bestimmungsgemäßer Aufstellung der Lebensmittelzubereitungsvorrichtung 1 auf einer horizontalen Fläche dieser zugewandt ist. Am Gehäuse 3 sind, vorliegend als Standfüße ausgebildete Abstützflächen 10 realisiert, die einen untersten Bereich der Lebensmittelzubereitungsvorrichtung 1 entlang einer Vertikalen V definieren, die sich senkrecht zu einer Horizontalen H erstreckt. Die Abstützflächen definieren eine Grundfläche 46 der Vorrichtung, die bei bestimmungsgemäßer Aufstellung horizontal ausgerichtet ist.

Die Lebensmittelzubereitungsvorrichtung 1 umfasst eine untere, vorliegend als kombinierte Back- und Formplatte ausgebildete Platte 11, die in Fig. 1 dreifach bzw. in drei unterschiedlichen Funktionspositionen dargestellt ist, nämlich eine in der Zeichnungsebene linken, in Richtung der Gehäusefrontseite 6 verstellten Aufnahmeposition A in einem Bereich entlang der Vertikalen V unterhalb der Kapselhandhabungseinrichtung 4, um die aus der Kapsel entleerte Teigportion aufnehmen zu können. Aus der Aufnahmeposition A ist die untere Platte 11, vorliegend in Richtung einer von der Gehäusefrontseite 6 abgewandten bzw. dieser gegenüberliegenden Gehäuserückseite 13 verstellbar in eine Wechselwirkungsposition W, in der die untere Platte 1 zum Formen und Backen der Teigportion 2, welche vorliegend nochmals eingezeichnet ist, im Backraum 7 mit einer oberen, ebenfalls als kombinierte Back- und Formplatte ausgebildeten Platte 14 zusammenwirkt. Zu diesem Zweck ist die obere Platte 14 entlang der Vertikalen V höhenverstellbar relativ zu unteren Platte 11, um die Teigportion 2 durch Pressen zu verformen bzw. zu verflachen und zu backen. Nach dem Backprozess wird die untere Platte 11 aus der Wechselwirkungsposition verstellt in eine zumindest größtenteils aus dem Backraum 7 herausverstellte Entleerungsposition 11, in der die untere Platte 11 mit der Horizontalen H einen Winkel einschließt, hier lediglich beispielhaft von etwa 45°, um ein selbsttätiges Herunterrutschen des Lebensmittels 5 in einen Behälter 15 zu bewirken, der vorliegend als Lebensmittelschublade ausgebildet ist, die aus der Gehäusefrontseite 6 zusammen mit dem fertigen Lebensmittel entnehmbar ist. Aus Fig. 1 ist zu entnehmen, dass sich die obere Platte 14 entlang der Vertikalen V innerhalb des Backraums 7 oberhalb der unteren Platte 11 befindet. Die untere Platte 11 und die obere Platte 14 sind in der Wechselwirkungsposition W parallel ausgerichtet, hier vorliegend wie bevorzugt horizontal. Ebenso ist die untere Platte 11 in ihrer Aufnahmeposition A horizontal ausgerichtet und lediglich in der Entleerungsposition E abgewinkelt bzw. geneigt.

Zum Verstellen der unteren Platte 11 zwischen ihren drei unterschiedlichen Funktionspositionen ist bevorzugt ein nicht gezeigter elektromotorischer Antrieb vorgesehen sowie eine im Folgenden anhand der Figuren 1a bis 5b erläuterten Führungseinrichtung 16, die die untere Platte 11 bei ihrer Verstellbewegung führt. Die Führungseinrichtung 16 umfasst hierzu eine Kulisse 17, in der die untere Platte 11 mit mindestens einem seitlichen Führungsfortsatz 18 in Wechselwirkung tritt. Bei Bedarf kann ein weiterer, hier als hinterer Führungsfortsatz 19 vorgesehen werden, der ebenfalls in der Kulisse 17 verstellbar ist.

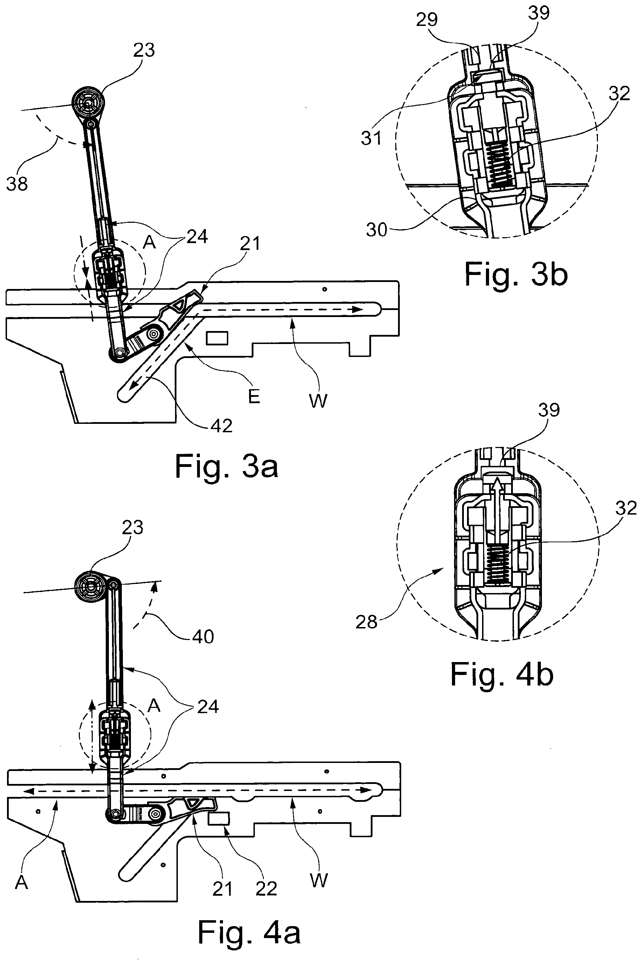

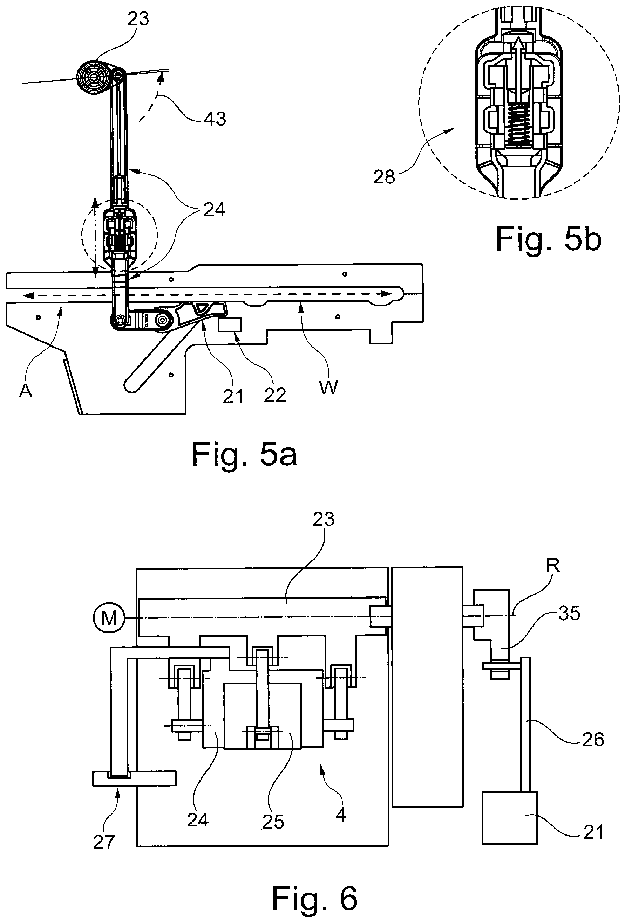

Die Führungseinrichtung 16 umfasst eine Weiche 20 (Weichenmechanismus) mit einem verschwenkbar angeordneten Weichenelement 21, welches zwischen zwei Schaltpositionen mittels eines schematisch angedeuteten elektromotorischen Antriebs M verstellbar ist, wobei in der in Fig. 1a gezeigten ersten Schaltposition, die definiert bzw. begrenzt wird durch einen ortsfesten Anschlag 22 die untere Platte 11 mittels des ihr zugeordneten Antriebs - zwischen der Aufnahmeposition A und der Wechselwirkungsposition W verstellbar ist. Das Weichenelement 21 kann durch Betätigung mittels des elektromagnetischen Antriebs M zudem in eine in Fig. 3a gezeigte zweite Schaltposition verstellt, hier verschwenkt werden, in der eine Verstellung der unteren Platte 11 zwischen der Wechselwirkungsposition W und der (geneigten) Entleerungsposition E möglich ist. Mittels des elektromotorischen Antriebs M ist eine Exzenterwelle 23 um eine Rotationsachse R rotierbar, wobei das Weichenelement 21 über Kraftübertragungsmittel 24 gelenkig mit der Exzenterwelle 23 mit Radialabstand zur Rotationsachse R verbunden ist. Das Weichenelement 21 ist verschwenkbar angeordnet um eine ortsfeste Schwenkachse S, wobei die Kraftübertragungsmittel 24 mit Abstand zu der Schwenkachse S gelenkig mit dem Weichenelement verbunden sind. Wie später noch im Detail erläutert werden wird (vgl. Fig. 6), sind mit der Exzenterwelle 23 zusätzlich noch ein (Entleerungs-)Stößel 25 sowie ein Niederhaltestempel 26 gelenkig verbunden bzw. verstellbar gekoppelt, sodass es sich bei dem elektromotorischen Antrieb M in dem bevorzugten Ausführungsbeispiel um einen gemeinsamen elektromotorischen Antrieb eines Öffnungs- und/oder Entleerungsmechanismus der Kapselhandhabungseinrichtung 4 und der Weiche 20 handelt. Zudem kann in vorteilhafter Weise mittels des elektromotorischen Antriebs M durch Verstellen des Niederhaltestempels 26 ein Verriegelungsmechanismus 27 für eine bevorzugt vorgesehene Kapselschublade betätigt werden.

Die Kulisse 17 umfasst einen horizontalen ersten Führungsabschnitt 41 innerhalb dessen die untere Platte zwischen der Aufnahmeposition A und der Wechselwirkungsposition W verstellbar ist und einen hierzu einen Winkel aufspannenden zweiten Führungsabschnitt 42, zu in über den die untere Platte 11 in die Entnahmeposition E gelangt, der zweite Führungsabschnitt 42 ist als Sackgassenabschnitt ausgebildet, sodass die untere Platte 11 bzw. der Führungsfortsatz 18 wieder über denselben Weg zurückbewegt werden muss in Richtung Wechselwirkungsposition W, um die Entleerungsposition E wieder zu verlassen.

Den Kraftübertragungsmitteln 24 ist eine Toleranzausgleichseinrichtung 28 zugeordnet, um systembedingte Toleranzen in Bezug auf den Drehwinkel der Exzenterwelle 23 zu kompensieren bzw. dafür Sorge zu tragen, dass diese die Funktion der Weiche 20 nicht beeinträchtigen. Die Kraftübertragungsmittel 24 umfassen hierzu zwei entlang ihrer Längserstreckung fluchtend angeordnete Kraftübertragungselemente 29, 30, die relativ zueinander verstellbar sind. Die Kraftübertragungselemente 29, 30 sind gleitend translatorisch verstellbar ineinander gelagert und die geradlinige Gleitbewegung aufeinander zu (Druckbelastung in der zweiten Schaltposition) wird über einen justierbaren, hier als Schraube ausgebildeten Anschlag 31 und voneinander weg (Zugbelastung in Schaltposition 1) über eine Toleranzausgleichsfeder 32 begrenzt. Der Anschlag 31 ist, wie erwähnt, justierbar, bzw. adaptierbar unter gleichzeitiger Veränderung der Vorspannung der Toleranzausgleichsfeder 32, die sich axial einends an dem Anschlag 31 auf der von einer hubbegrenzenden Anschlagsfläche 33 abgewandten Seite am Anschlag 31 abstützt, wobei der Anschlag 31 Bestandteil des in der Zeichnungsebene unteren Kraftübertragungselementes 30 ist. Mit ihren anderen axialen Ende stützt sich die Toleranzausgleichsfeder 32 am in der Zeichnungsebene oberen Kraftübertragungselement 29 ab.

Wie erwähnt, befindet sich das Weichenelement 21 in der Darstellung gemäß Fig. 1a und 1b in der ersten Schaltstellung. Die untere Platte 11 wirkt mit dem Weichenelement 21 beim Verstellen der unteren Platte 11 über den Führungsfortsatz 18 zusammen. Bei der Darstellung in dem Betriebszustand gemäß Fig. 1a befindet sich die untere Platte 11 zunächst noch in der Aufnahmeposition A und wird dann in Richtung in die Wechselwirkungsposition W verstellt. Die Exzenterwelle bzw. die gelenkige Verbindung 34 zwischen den Kraftübertragungsmitteln 24 und einem radialen Exzenterfortsatz 35 der Exzenterwelle 23 befindet sich, hier beispielhaft im Uhrzeigersinn in einer Endstellung 36. Das Weichenelement 21 (Schaltelement) der Weiche 20 liegt waagerecht bzw. horizontal in der Führungseinrichtung und stützt sich am Anschlag 22 ab. Die Kraftübertragungsmittel 24 werden, wie durch den Doppelpfeil in Fig. 1a angedeutet auf Zug belastet, was zur Folge hat, dass die Toleranzausgleichsfeder 31 zwischen den Kraftübertragungselementen 29, 30 im Toleranzausgleich zusammengedrückt, sprich weiter gespannt wird. Das Weichenelement 21 wird über die Kraftübertragungsmittel 24 und die Federkraft der Toleranzausgleichsfeder der Toleranzausgleichseinrichtung 28 in der gezeigten (horizontalen) ersten Schaltposition gehalten.

In Fig. 1c ist die Toleranzausgleichseinrichtung 28 nochmals vergrößert dargestellt, wobei zur erleichterten Differenzierung der relativ zueinander verstellbaren Teile, dass das in der Zeichnungsebene untere Kraftübertragungselement 30 grau eingefärbt ist, ebenso wie der als Schraube ausgebildete Anschlag 31, der ortsfest relativ zu diesem unteren Kraftübertragungselement 30 angeordnet ist. Zu erkennen ist der Wirkmechanismus zwischen den Kraftübertragungselementen 29, 30 der bewirkt, dass bei einer Zugkraftbelastung die Toleranzausgleichsfeder 32 zusammengedrückt wird.

In den Fig. 2a und 2b ist die erste Schaltstellung des Weichenelementes 21 nochmals gezeigt, hier jedoch befindet sich die gelenkige Verbindung 34 zwischen den Kraftübertragungsmitteln 24 und dem Exzenter 35, 5° an einer Position 37 im Uhrzeigersinn vor der Endstellung 36. Das Weichenelement 21 liegt horizontal und stützt sich am Anschlag 22 ab, analog zu dem Zustand gemäß Fig. 1a. Die Kraftübertragungsmittel 24 sind auf Zug belastet, was zur Folge hat, dass die Feder zwischen den Kraftübertragungselementen 29, 30 zusammengedrückt wird, jedoch aufgrund der vorgelagerten Dreh- bzw. Toleranzsituation der Exzenterwelle etwas weniger stark als bei der gewünschten Sollposition gemäß Fig. 1a. Dennoch ist die Schaltsituation bzw. die Schaltposition 1 sichergestellt. Hierzu wird auf die vergrößerte Darstellung gemäß Fig. 2 verwiesen. Der dort gezeigte Pfeil deutet den Toleranzausgleich an.

Fig. 3a und 3b zeigen die zweite Schaltstellung des Weichenelementes 21, die nun den Weg zurück in die Aufnahmeposition versperrt und bei einer Verstellbewegung der unteren Platte 11, diese die durch Wechselwirkung mit dem Führungsfortsatz in die abgeschrägte Entleerungsposition E lenkt. Zum Erreichen dieser zweiten Schaltstellung wurde die Exzenterwelle 23 mittels des elektromotorischen Antriebs im Gegenuhrzeigersinn in die gezeigte Position 38 verstellt. Dabei werden die Kraftübertragungselemente 29, 30 aufeinander zu bewegt, bis der Anschlag 31 (vorliegend beispielhaft die Schraube) an einer gegenüberliegenden Anschlagsposition 38 des in der Zeichnungsebene oberen Kraftübertragungselementes 29 anliegt. Der justierbare Anschlag 31 ermöglicht, dass die Länge der in diesem Ausführungsbeispiel zwei geteilten Kraftübertragungsmittel bzw. der beiden Kraftübertragungselemente 29, 30 in diesem zweiten Schaltzustand und somit die Schrägstellung des Weichenelementes angepasst werden kann.

Aus Fig. 3a ist ersichtlich, dass aufgrund der Ausbildung des zweiten Führungsabschnittes 42 als Sackgassenabschnitt die untere Platte 11 wieder in dieselbe Richtung zurückgefördert werden muss, um die Entleerungsposition E wieder zu verlassen.

Bei dem Ausführungsbeispiel gem. Fig. 4a und 4b wurde die Exzenterwelle 23 im Gegenuhrzeigersinn weiterbewegt in Umfangsposition 40, die eine weitere Endstellung zu der im Zusammenhang mit Fig. 1 beschriebenen Endstellung darstellt. Das Weichenelement 21 liegt wieder horizontal bzw. waagerecht sodass die untere Platte 11 aus der Wechselwirkungsposition W zurück in die Aufnahmeposition A verstellt werden kann.

Das Weichenelement 21 stützt sich wieder am Endanschlag 22 ab, der insoweit die zweite Schaltposition definiert. Die Kraftübertragungsmittel 24 sind auf Zug belastet, was zur Folge hat, dass die Toleranzausgleichsfeder 32 zwischen den Kraftübertragungselementen 29, 30 zusammengedrückt und damit weiter gespannt wird. Das Weichenelement 21 der Weiche 20 wird über die Federkraft der Toleranzausgleichsfeder der Toleranzausgleichseinrichtung 28 in der zweiten Schaltstellung gehalten.

Fig. 5a und 5b zeigen in Analogie zu Fig. 2a eine toleranzbedingte mögliche Betriebssituation, bei der sich die Exzenterwelle 23 etwa 5° vor der Endstellung 40 gemäß Fig. 4a in einer Umfangsposition 43 befindet. Auch hier werden die Kraftbeaufschlagungsmittel auf Zug belastet und die Feder zusammengedrückt, jedoch weniger stark als in der eigentlichen Sollposition gemäß den Fig. 4a und Fig. 4b.

Fig. 6 zeigt eine schematische Darstellung der Exzenterwelle 23 die über den elektromotorischen Antrieb M rotierbar ist und dabei nicht nur das Weichenelement 21 schaltet, sondern auch den Stößel 25 und den Niederhaltestempel 26 bewegt, die Bestandteil der Kapselhandhabungseinrichtung 4 sind.

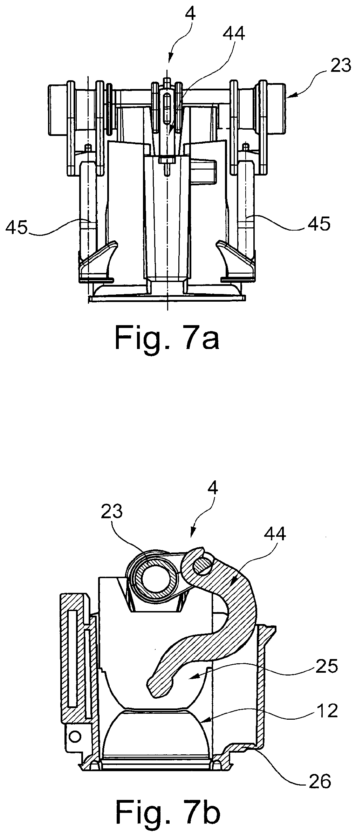

Fig. 7a und 7b zeigen die Kraftübertragungseinrichtung 4 in unterschiedlichen Ansichten. Zu erkennen ist die von dem nicht dargestellten elektromotorischen Antrieb M rotierbaren Exzenterwelle 23, mit der über Gelenkhebel der Stößel 25 relativ zu dem Niederhaltestempel 26, in diesem translatorisch verstellbar geführt bewegbar ist, um mit den Niederhaltestempel eine Kapsel 12 zum Öffnen derselben gegen ein nicht gezeigtes Messer zu verstellen und, insbesondere daraufhin die Teigportion aus der Kapsel 12 mittels des Stößels 25 herauszupressen.

### Bezugszeichenliste

- 1: Lebensmittelzubereitungsvorrichtung
- 2: Teigportion
- 3: Gehäuse
- 4: Kaselhandhabungseinrichtung
- 5: Lebensmittel/Lebensmittelprodukt
- 6: Gehäusefrontseite
- 7: Backraum
- 8: Backraumgehäuse
- 9: Bodenseite
- 10: Abstützflächen
- 11: untere Platte
- 12: Kapsel
- 13: Gehäuserückseite
- 14: obere Platte
- 15: Behälter
- 16: Führungseinrichtung
- 17: Kulisse
- 18: Führungsfortsatz
- 19: weiterer Führungsfortsatz
- 20: Weiche
- 21: Weichenelement
- 22: Anschlag für Weichenelement
- 23: Exzenterwelle
- 24: Kraftübertragungsmittel
- 25: Stößel
- 26: Niederhaltestempel
- 27: Verriegelungsmechanismus
- 28: Toleranzausgleichseinrichtung
- 29: Kraftübertragungselement
- 30: Kraftübertragungselement
- 31: Anschlag der Toleranzausgleichseinrichtung
- 32: Toleranzausgleichsfeder
- 33: Anschlagsfläche des Anschlags 31
- 34: gelenkige Verbindung
- 35: Exzenterfortsatz
- 36: Endstellung im Uhrzeigersinn
- 37: Umfangsposition vor Sollendstellung
- 38: Umfangsposition in zweiter Schaltstellung
- 39: Anschlagsgegenposition
- 40: Endstellung im Gegenuhrzeigersinn
- 41: erster Führungsabschnitt
- 42: zweiter Führungsabschnitt
- 43: Umfangsposition vor Sollendstellung
- 44: Gelenkhebel
- 45: Gelenkhebel
- 46: Grundfläche

- A: Aufnahmeposition
- W: Wechselwirkungsposition
- E: Entleerungsposition
- M: elektromotorischer Antrieb
- R: Rotationsachse der Exzenterwelle
- S: Schwenkachse

## Patentansprüche

1. Backvorrichtung zum Formen und Backen eines Lebensmittels (5), bevorzugt eines Flachbrotes aus einer in einer Kapsel (12) aufgenommenen Teigportion (2), mit einem Gehäuse (3), mit einer Kapselhandhabungseinrichtung (4) zum Öffnen und/oder Entleeren der Kapsel (46) und einer in dem Gehäuse (3) angeordneten oberen Platte (14) und einer unteren Platte (11), die in einer Führungseinrichtung der Backvorrichtung entlang eines Verstellweges zwischen einer Aufnahmeposition (A) zur Aufnahme der Teigportion (2) aus der Kapsel (12), einer Wechselwirkungsposition (W) zum Zusammenwirken mit der oberen Platte (14) zum Backen und/oder Formen, insbesondere Pressen, der Teigportion und einer Entleerungsposition (E), in der die untere Platte (11) relativ zu einer Grundfläche (46) der Backvorrichtung geneigt ist verstellbar ist, wobei die Führungseinrichtung eine Weiche (20) mit einem zwischen mindestens zwei Schaltpositionen schaltbaren Weichenelement (21) zur Vorgabe des Verstellweges der unteren Platte (11) in der Führungseinrichtung aufweist,
**dadurch gekennzeichnet,**
**dass** die Backvorrichtung einen dem Weichenelement (21) zugeordneten elektromotorischen Antrieb (M) zum automatischen Schalten des Weichenelementes (21) umfasst.

2. Backvorrichtung nach Anspruch 1,
**dadurch gekennzeichnet,**
**dass** der elektromotorische Antrieb (M) ein Antrieb zum Betätigen eines Kapselöffnungs- und/oder Entleerungsmechanismus der Kapselhandhabungseinrichtung (4) ist.

3. Backvorrichtung nach Anspruch 2,
**dadurch gekennzeichnet,**
**dass** mittels des elektromotorischen Antriebs (M) ein Stößel (25) der Kapselhandhabungsvorrichtung (4) zum Entleeren der Teigportion (2) aus der Kapsel (12), insbesondere unter Deformation der Kapsel (12) und/oder ein bevorzugt relativ zu dem Stößel (25) verstellbarer, Niederhaltestempels (26) zum Verstellen der Kapsel (12) gegen ein Öffnungselement, insbesondere ein Messer, zum Durchstoßen eines Kapseldecks antreibbar ist.

4. Backvorrichtung nach einem der vorhergehenden Ansprüche,
**dadurch gekennzeichnet,**
**dass** das Weichenelement (21) durch Rotieren des elektromotorischen Antriebs (M) betätigbar ist, in dem eine Verstellkraft von dem elektromotorischen Antrieb (M) auf das Weichenelement (21) über Kraftübertragungsmittel (24) übertragbar ist, wobei bevorzugt mittels des elektromotorischen Antriebs (M) eine Exzenterwelle (23) rotierbar ist und das Weichenelement (21) über die Kraftübertragungsmittel (24) mit der Exzenterwelle (23), insbesondere mit Radialabstand zu deren Rotationsachse (R), wirkverbunden ist.

5. Backvorrichtung nach Anspruch 4,
**dadurch gekennzeichnet,**
**dass** die Kraftübertragungsmittel (24) eine Toleranzausgleichseinrichtung (28) mit zwei durch Rotieren des elektromotorischen Antriebs (M) relativ zueinander entgegen einer Federkraft mindestens einer Toleranzausgleichsfeder (32), bevorzugt translatorisch, relativ zueinander verstellbare Kraftübertragungselemente (29, 30) der Kraftübertragungsmittel, insbesondere relativ zueinander translatorisch geführte Stabelemente (24), umfasst.

6. Backvorrichtung nach Anspruch 5,
**dadurch gekennzeichnet,**
**dass** die mindestens eine Toleranzausgleichsfeder (32) derart angeordnet ist, dass diese bei Zugkraftbeaufschlagung der Kraftübertragungselemente (29, 30) mittels des elektromotorischen Antriebs (M) spannbar ist, wobei bevorzugt die Toleranzausgleichsfeder (32) in einer Schaltposition des Weichenelementes (21), die ein Verstellen der unteren Platte (11) von der Wechselwirkungsposition (W) in die Entleerungsposition (E) ermöglicht gespannt ist.

7. Backvorrichtung nach einem der Ansprüche 5 oder 6,
**dadurch gekennzeichnet,**
**dass** die Relativbeweglichkeit der Kraftübertragungselemente (29, 30) durch einen, insbesondere justierbaren, Anschlag begrenzt ist, durch dessen Justierbewegung bevorzugt eine Federvorspannung der mindestens einen Toleranzausgleichsfeder (32) einstellbar ist.

8. Backvorrichtung nach einem der Ansprüche 5 bis 7,
**dadurch gekennzeichnet,**
**dass** das Weichenelement (21) um eine Schwenkachse (S) verschwenkbar gelagert ist und mit Abstand zu der Schwenkachse (S) gelenkig mit einem der Kraftübertragungselemente (29, 30) verbunden ist.

9. Backvorrichtung nach einem der vorhergehenden Ansprüche,
**dadurch gekennzeichnet,**
**dass** die Führungseinrichtung (16) derart ausgebildet ist, dass die untere Platte (11) in der Entleerungsposition (E) hin zu einer, bevorzugt eine Kapselschubladeneinführöffnung und/oder mindestens ein Eingabeelement für Benutzereingaben und/oder mindestens ein Display aufweisenden Gehäusevorderseite (6) geneigt ist und/oder sich zumindest abschnittsweise, bevorzugt über den größten Teil ihrer Längserstreckung, in ihrer Aufnahmeposition (A) unterhalb, insbesondere in einer vertikalen Projektionsfläche eines Stößels (25) und/oder Niederhaltestempels (26) der Kapselhandhabungseinrichtung (4) und/oder unterhalb einer Kapselschublade zum Zuführen einer Kapsel (12) in das Gehäuse (3) angeordnet ist.

10. Backvorrichtung nach einem der vorhergehenden Ansprüche,
**dadurch gekennzeichnet,**
**dass** die Führungseinrichtung einen geradlinigen, insbesondere horizontalen, ersten Führungsabschnitt (41) zum Verstellen der unteren Platte (11) zwischen der Aufnahmeposition (A) und der Wechselwirkungsposition (W) aufweist und einen winklig zu dem ersten Führungsabschnitt (41) angeordneten, bevorzugt geradlinigen oder gekrümmten, zweiten, bevorzugt nach unten und in Richtung Gehäusevorderseite (6) geneigten, Führungsabschnitt zum Verstellen der unteren Platte (11), insbesondere von der Wechselwirkungsposition (W), in die Entleerungsposition (E).

11. Backvorrichtung nach Anspruch 10,
**dadurch gekennzeichnet,**
**dass** der zweite Führungsabschnitt (42) als Sackgassenabschnitt ausgebildet ist.

12. Backvorrichtung nach einem der vorhergehenden Ansprüche,
**dadurch gekennzeichnet,**
**dass** der Entleerungsposition (E) ein, bevorzugt von einer aus einer Gehäusefrontseite (6) entnehmbaren Lebensmittelschublade, gebildeter Aufnahmeraum für ein fertig gebackenes Lebensmittel (5) innerhalb des Gehäuses (3) zugeordnet ist.

13. Verfahren zum Betreiben einer Backvorrichtung nach einem der vorhergehenden Ansprüche, wobei eine Teigportion (2) aus einer Kapsel (12) entleert und in der Aufnahmeposition (A) der unteren Platte (11) auf diese aufgebracht wird,
**dadurch gekennzeichnet,**
**dass** das Weichenelement (21) mittels eines elektromotorischen Antriebs (M) zwischen seinen Schaltpositionen verstellt wird.

14. Verfahren nach Anspruch 13,
**dadurch gekennzeichnet,**
**dass** beim Verstellen des Weichenelementes (21) ein Kapselöffnungs- und/oder Entleerungsmechanismus betätigt wird, insbesondere ein Stößel (25) zum Entleeren der Kapsel (46) und/oder ein Niederhaltestempel (26) zum Verstellen der Kapsel (46) gegen ein Öffnungselement bewegt werden/wird.

15. Verfahren nach einem der Ansprüche 13 oder 14,
**dadurch gekennzeichnet,**
**dass** beim Verstellen des Weichenelementes (21) mindestens eine Toleranzausgleichsfeder (32) zwischen zwei Kraftübertragungselementen (29, 30) gespannt und/oder entspannt wird.

## Claims

1. A baking apparatus for forming and baking a food product (5), preferably a flat bread, from a dough portion (2) accommodated in a capsule (12), the backing apparatus having a housing (3), having a capsule-handling device (4) for opening and/or emptying the capsule (12), and having an upper plate (14) and a lower plate (11), arranged in the housing (3), which lower plate can be displaced in a guide device of the baking apparatus along a displacement path between a receiving position (A) for receiving the dough portion (2) from the capsule (12), an interaction position (W) for interacting with the upper plate (14) for baking and/or forming, in particular pressing, the dough portion, and an emptying position (E) in which the lower plate (11) is inclined relative to a base surface (46) of the baking apparatus, the guide device having a diverter (20) which has a diverter element (21) which can be switched between at least two switching positions for predetermining the displacement path of the lower plate (11) in the guide device,
**characterized in that**
the baking apparatus comprises an electromotive drive (M) assigned to the diverter element (21) for switching the diverter element (21) automatically.

2. The baking apparatus according to claim 1,
**characterized in that**
the electromotive drive (M) is a drive for actuating a capsule opening and/or emptying mechanism of the capsule-handling device (4).

3. The baking apparatus according to claim 2,
**characterized in that**,
by means of the electromotive drive (M), a plunger (25) of the capsule-handling device (4) can be driven from the capsule (12), in particular accompanied by deformation of the capsule (12), for emptying the dough portion (2) and/or a holding-down stamp (26) which is preferably displaceable relative to the plunger (25) can be driven for displacing the capsule (12) against an opening element, in particular a blade, for piercing a capsule top.

4. The baking apparatus according to any one of the preceding claims,
**characterized in that**
the diverter element (21) can be actuated by rotating the electromotive drive (M) in which a displacement force can be transmitted from the electromotive drive (M) to the diverter element (21) via force transmission means (24), wherein, preferably by means of the electromotive drive (M), an eccentric shaft (23) can be rotated and the diverter element (21) is operatively connected to the eccentric shaft (23) via the force transmission means (24), in particular at a radial distance from the axis of rotation (R) thereof.

5. The baking apparatus according to claim 4,
**characterized in that**
the force transmission means (24) comprise a tolerance compensating device (28) which has two force transmission elements (29, 30) of the force transmission means, in particular rod elements (24) guided translationally relative to one another, which are displaceable relative to one another, preferably translationally, contrary to a spring force of at least one tolerance compensating spring (32) by rotation of the electromotive drive (M).

6. The baking apparatus according to claim 5,
**characterized in that**
the at least one tolerance compensating spring (32) is disposed in such a manner that it can be tensioned by applying a tensile force of the force transmission elements (29, 30) by means of the electromotive drive (M), preferably the tolerance compensating spring (32) being tensioned in a switching position of the diverter element (21) which enables a displacement of the lower plate (11) from the interaction position (W) into the emptying position (E).

7. The baking apparatus according to any one of claims 5 or 6,
**characterized in that**
the relative mobility of the force transmission elements (29, 30) is limited by an, in particular adjustable, stop, wherein a spring pretension of the at least one tolerance compensating spring (32) can preferably be set by means of the adjustment movement of the stop.

8. The baking apparatus according to any one of claims 5 to 7,
**characterized in that**
the diverter element (21) is pivotally mounted about a pivot axis (S) and is connected in an articulated manner to one of the force transmission elements (29, 30) at a distance from the pivot axis (S).

9. The baking apparatus according to any one of the preceding claims,
**characterized in that**
the guide device (16) is realized in such a manner that the lower plate (11) in the emptying position (E) is inclined towards a housing front side (6), preferably having a capsule drawer insertion opening and/or at least one input element for user inputs and/or at least one display and/or is disposed at least in sections, preferably over the greatest part of its longitudinal extension, in its receiving position (A) below, in particular in a vertical projection surface of a plunger (25) and/or holding-down stamp (26) of the capsule-handling device (4) and/or below a capsule drawer for feeding a capsule (12) into the housing (3).

10. The baking apparatus according to any one of the preceding claims,
**characterized in that**
the guide device comprises a rectilinear, in particular horizontal, first guide portion (41) for displacing the lower plate (11) between the receiving position (A) and the interaction position (W) and a second, preferably rectilinear or curved, second guide portion which is disposed at an angle to the first guide portion (41) and which is preferably inclined downwards and in the direction of the housing front side (6), for displacing the lower plate (11), in particular from the interaction position (W), into the emptying position (E).

11. The baking apparatus according to claim 10,
**characterized in that**
the second guide portion (42) is realized as a dead end portion.

12. The baking apparatus according to any one of the preceding claims,
**characterized in that**
the emptying position (E) is assigned a receiving chamber for a ready baked food product (5), preferably formed by a food drawer which can be removed from a housing front side (6), inside the housing (3).

13. A method for operating a baking apparatus according to any one of the preceding claims, a dough portion (2) being emptied from a capsule (12) and being placed on the lower plate (11) in the receiving position (A) of the lower plate (11),
**characterized in that**
the diverter element (21) is displaced between its switching positions by means of an electromotive drive (M).

14. The method according to claim 13,
**characterized in that**,
during the displacement of the diverter element (21), a capsule opening and/or emptying mechanism is actuated, in particular a plunger (25) for emptying the capsule (12) and/or a holding-down stamp (26) for displacing the capsule (12) against an opening element is/are moved.

15. The method according to claim 13 or 14,
**characterized in that**,
during the displacement of the diverter element (21), at least one tolerance compensating spring (32) is tensioned and/or released between two force transmission elements (29, 30).

## Revendications

1. Dispositif de cuisson destiné à façonner et à cuire un produit alimentaire (5), de préférence un pain plat à partir d'une portion de pâte (2) contenue dans une capsule (12), le dispositif de cuisson comprenant un boîtier (3) et comprenant un appareil de manutention de capsule (4) destiné à ouvrir et/ou vider la capsule (12) et le dispositif de cuisson comprenant une plaque supérieure (14) et une plaque inférieure (11) disposées dans le boîtier (3), la plaque inférieure (11) étant déplaçable dans un appareil de guidage du dispositif de cuisson le long d'un trajet de déplacement entre une positon de réception (A) pour recevoir la portion de pâte (2) de la capsule (12), une position d'interaction (W) pour interagir avec la plaque supérieure (14) afin de cuire et/ou façonner, notamment presser, la portion de pâte et une position de vidage (E) dans laquelle la plaque inférieure (11) est inclinée relativement à une surface de base (46) du dispositif de cuisson, l'appareil de guidage ayant un aiguillage (20) qui a un élément d'aiguillage (21) qui peut être commuté entre au moins deux positions de commutation pour définir le trajet de déplacement de la plaque inférieure (11) dans l'appareil de guidage
**caractérisé en ce que**
le dispositif de cuisson comprend un moteur électrique (M) qui est assigné à l'élément d'aiguillage (21) et qui est destiné à la commutation automatique de l'élément d'aiguillage (21).

2. Dispositif de cuisson selon la revendication 1,
**caractérisé en ce que**
le moteur électrique (M) est un moteur pour actionner un mécanisme d'ouverture et/ou de vidage de capsule de l'appareil de manutention de capsule (4).

3. Dispositif de cuisson selon la revendication 2,
**caractérisé en ce**
**qu'**un poussoir (25) de l'appareil de manutention de capsule (4) destiné à vider la portion de pâte (2) de la capsule (12), notamment en déformant la capsule (12), et/ou un poinçon de maintien (26) qui est, de préférence, déplaçable relativement au poussoir (25) et qui est destiné à déplacer la capsule (12) contre un élément d'ouverture, notamment une lame, destiné à percer un couvercle de capsule peut être entrainé au moyen du moteur électrique.

4. Dispositif de cuisson selon l'une quelconque des revendications précédentes,
**caractérisé en ce que**
l'élément d'aiguillage (21) peut être actionné par tourner le moteur électrique (M), une force de déplacement pouvant être transmise du moteur électrique (M) à l'élément d'aiguillage (21) par des moyens de transmission de force (24), une arbre excentrique (23) pouvant être tournée, de préférence au moyen du moteur électrique (M), et l'élément d'aiguillage (21) étant en liaison active avec l'arbre excentrique (23), notamment à une distance radiale par rapport à l'axe de rotation (R), par les moyens de transmission de force (24).

5. Dispositif de cuisson selon la revendication 4,
**caractérisé en ce que**
les moyens de transmission de force (24) comprennent un appareil de compensation de tolérances (28) qui a deux éléments de transmission de force (29, 30) des moyens de transmission de force, notamment des éléments de barre (24), guidés en translation l'un par rapport à l'autre, qui peuvent être déplacés l'un par rapport à l'autre, de préférence en translation, contre une force de ressort d'au moins un ressort de compensation de tolérances (32) par tourner le moteur électrique (M).

6. Dispositif de cuisson selon la revendication 5,
**caractérisé en ce que**
le, au moins un, ressort de compensation de tolérances (32) est disposé de telle manière que ledit ressort de compensation de tolérances (32) peut être serré au moyen du moteur électrique (M) quand une force de traction est appliquée aux éléments de transmission de force (29, 30), le ressort de compensation de tolérances (32) étant serré, de préférence, dans une position de commutation de l'élément d'aiguillage (21) qui permet un déplacement de la plaque inférieure (11) de la position d'interaction (W) à la position de vidage (E).

7. Dispositif de cuisson selon la revendication 5 ou la revendication 6,
**caractérisé en ce que**
la mobilité relative des éléments de transmission de force (29, 30) est limitée par une butée, notamment réglable, une précontrainte élastique d'au moins un ressort de compensation de tolérances (32) étant ajustable, de préférence, par le mouvement de réglage de la butée.

8. Dispositif de cuisson selon l'une quelconque des revendications 5 à 7,
**caractérisé en ce que**
l'élément d'aiguillage (21) est monté de manière pivotante autour d'un axe de pivotement (S) et que l'élément d'aiguillage est relié de manière articulée à un des éléments de transmission de force (29, 30) à une distance de l'axe de pivotement (S).

9. Dispositif de cuisson selon l'une quelconque des revendications précédentes,
**caractérisé en ce que**
l'appareil de guidage (16) est réalisé de telle manière que la plaque inférieure (11) est inclinée vers une face avant de boîtier (6) qui a, de préférence, une ouverture d'introduction de tiroir de capsule et/ou au moins un élément d'entrée pour des entrées d'utilisateur et/ou au moins un écran, et/ou que l'appareil de guidage (16) est disposé, au moins par sections, de préférence sur la plus grande partie de sa extension longitudinale, dans sa position de réception (A) en dessous, notamment dans une surface de projection verticale d'un poussoir (25) et/ou poinçon de maintien (26) de l'appareil de manutention de capsule (4) et/ou en dessous d'un tiroir de capsule destiné à délivrer une capsule (12) dans le boîtier (3).

10. Dispositif de cuisson selon l'une quelconque des revendications précédentes,
**caractérisé en ce que**
l'appareil de guidage a une première section de guidage (41) linéaire, notamment horizontale, qui est destinée à déplacer la plaque inférieure (11) entre la position de réception (A) et la position d'interaction (W) et une deuxième section de guidage, de préférence linéaire ou courbée, de préférence inclinée vers le bas et dans la direction de la face avant de boîtier (6), qui est disposée de manière angulaire par rapport à la première section de guidage (41) et qui est destinée à déplacer la plaque inférieure (11), notamment de la position d'interaction (W), à la position de vidage (E).

11. Dispositif de cuisson selon la revendication 10,
**caractérisé en ce que**
la deuxième section de guidage (42) est réalisée comme section d'impasse.

12. Dispositif de cuisson selon l'une quelconque des revendications précédentes,
**caractérisé en ce**
**qu'**une chambre de réception pour un produit alimentaire (5) cuit est assignée à la position de vidage (E) à l'intérieur du boîtier (3), ladite chambre de réception étant, de préférence, composé d'un tiroir de produit alimentaire qui peut être retiré d'une face avant de boîtier (6).

13. Procédé de fonctionnement d'un dispositif de cuisson selon l'une quelconque des revendications précédentes, une portion de pâte (2) étant vidée d'une capsule (12) et étant appliquée sur la plaque inférieure (11) dans la position de réception (A) de ladite plaque inférieure (11),
**caractérisé en ce que**
l'élément d'aiguillage (21) est déplacé entre ses positions de commutation au moyen d'un moteur électrique (M).

14. Procédé selon la revendication 13,
**caractérisé en ce**
**qu'**un mécanisme d'ouverture et/ou de vidage de capsule est actionné quand l'élément d'aiguillage (21) est déplacé, notamment un poussoir (25) destiné à vider la capsule (12) et/ou un poinçon de maintien (26) destiné à déplacer la capsule (12) contre un élément d'ouverture étant/seront déplacé(s).

15. Procédé selon la revendication 13 ou la revendication 14,
**caractérisé en ce**
**qu'**au moins un ressort de compensation de tolérances (32) est serré et/ou desserré entre deux éléments de transmission de force (29, 30) quand l'élément d'aiguillage (21) est déplacé.
